# EUROPEAN PATENT APPLICATION

(11) **EP 1 698 675 A1**
(43) Date of publication of application: **06.09.2006**
(21) Application number: 04806980.1
(22) Date of filing: 14.12.2004
(51) Int. Cl.: C09D 201/00, C09D 5/03, C09D 157/10, C09D 157/12

(54) **THERMOSETTING POWDER COATING COMPOSITION**

(30) Priority: 24.12.2003 JP 2003427398
(71) Applicant: Dainippon Ink and Chemicals, Incorporated, Itabashi-ku Tokyo 174-8520 (JP)
(72) Inventor: FURUYA, Yutaka, 6410052 (JP); YAMAGUCHI, Koichi, 5940041 (JP); AGAWA, Tetsuro, 5918031 (JP); YAMAMURA, Kazuo, Osaka 5938303 (JP)
(74) Representative: Albrecht, Thomas
(86) International application number: PCT/JP2004/018619
(87) International publication number: WO 2005/061639

(57) **Abstract**

This thermosetting powder coating composition is a thermosetting powder coating composition which contains a coating forming component which can crosslink and harden by an ester exchange reaction between a carboxylic ester group and a hydroxyl group, and an ester exchange reaction catalyst, in which the ester exchange reaction catalyst is constituted from an organic sulfonate (X) derived from a carboxylic amide and an organic sulfonic acid having fluorine atoms.

## Description

### TECHNICAL FIELD

The present invention relates to a thermosetting powder coating composition which is capable of forming a coating which excels in hardenability at a low temperature, storage stability, and various characteristics such as acid resistance, etc.

### BACKGROUND ART

Thermosetting powder coating compositions are widely used wholly for coating metals, as an environmentally friendly coating which does not volatilize organic solvents into the air when coating. Among these, in particular, a thermosetting powder coating composition which contains an epoxy vinyl type polymer or polyester resin as a resin component can form a coating which excels in various physical properties such as processability, solvent resistance, etc., and hence the demand thereof is rapidly increasing.

Since such a thermosetting powder coating composition contains no organic solvents, it can be said that the thermosetting powder coating composition is the most excellent coating composition, from the viewpoint of reducing VOC, however, on the other hand, the thermosetting powder coating composition has a problem in that it necessitates a high baking temperature for making the coating composition crosslink and harden, compared to a solvent-type coating of a thermosetting type, from the viewpoint of energy saving and energy cost reduction.

In addition, the thermosetting powder coating composition has another problem in that it is hardly applicable to a material which is comparatively weak against heat or of which temperature is hardly elevated, such as plastic materials, wood, etc., and hence it is of urgent necessity to lower the baking temperature of the thermosetting powder coating composition.

As the hardening system presently having been put to practical use as the thermosetting powder coating composition, a combination of a hydroxyl polyester and a blocked isocyanate, a combination of an acid polyester and an epoxy compound, a combination of an acid polyester and a triglycidyl isocyanurate, a combination of an epoxy vinyl type polymer and a diacid, etc., have been adopted, and the baking condition of the thermosetting powder coating composition using them is generally approximately 180°C. It is necessary to use a baking temperature of not less than 140°C, even in a hardening system which can be hardened at a comparatively low temperature for the combination an epoxy vinyl type polymer and a diacid.

On the other hand, in the solvent type thermosetting coating, in general, those which excel in hardenability at a low temperature such as an amino resin hardening type are used under a condition of drying, and baking at a temperature of not higher than 120°C. Accordingly, from an industrial viewpoint, in order to replace the solvent type thermosetting coating used at present with the thermosetting powder coating composition, there is a problem in that the baking oven must be set such that the baking temperature can be elevated higher than that of existing baking conditions. In other words, there is an obstacle in replacing with an environmentally friendly thermosetting powder coating in that the thermosetting powder coating composition necessitates baking at high temperature.

As a method for lowering the baking temperature of the thermosetting powder coating composition, a hardening agent which excels in hardenability at a low temperature such as an amino resin, and a catalyst with a high activity have been employed, however, the heat resistance thereof was insufficient, or they accelerated solid phase reaction, such that the blocking resistance during storing of the thermosetting powder coating composition deteriorated causing problems in storage stability, and hence they had not been put to practical use.

As other hardening forms hitherto known well, for example, there is a resin composition for the use in powder coating which contains, as essential ingredients, a vinyl type polymer having both an epoxy group and hydroxyl group, an aliphatic diacid, an amino compound and an aldehyde type compound condensate, or an aminoplast produced by etherifying the condensate, however, the above resin composition for the use in powder coating necessitates a baking temperature of 150°C (for example, see Patent document 1).

Moreover, a powder coating resin composition which contains a resin consisting of a copolymer having both carboxylic alkyl ester groups and hydroxyl groups, a hardening catalyst of tetraisopropyl titanate, or an ester exchange catalyst such as p-toluenesulfonic acid is known well (for example, see Patent document 2). In the composition, ester exchange reaction between carboxylic alkyl ester groups and hydroxyl groups is utilized for a crosslinking hardening reaction, however, it necessitates a baking temperature of 180°C.

In addition, although it is not a study concerning the thermosetting powder coating composition, it has been reported that as a hardening system which can harden at a low temperature, diphenyl ammonium trifluorate obtained from diphenyl ammonium and trifluoromethane sulfonic acid is effective for improving reactivity under a condition of a comparatively low temperature of 80 to 110°C, in an esterification reaction of monohydric alcohol such as n-octanol, etc., and a monovalent acid such as 3-phenyl propionic acid, or an ester exchange reaction of a monoester such as 3-phenyl methyl propionate, etc., and a monohydric alcohol (for example, see Non-Patent document 1).

[Patent document 1] Japanese Unexamined Patent Application, First Publication No.H09-87552

[Patent document 2] Japanese Unexamined Patent Application, First Publication No.H08-92503
[Non-Patent document 1] "TETRAHEDRON LETTERS" (2000), 41(27), 5249-5252

However, if the above diphenyl ammonium trifluorate is used to crosslink and harden the compound having both carboxylic ester groups and hydroxyl groups by ester exchange reaction, then the resultant coating will be significantly colored, and hence it can not be applied to a thermosetting powder coating composition in which the appearance of the resultant coating is important. Moreover, the above non-Patent document 1 fails to disclose any observation concerning a hardening reaction of a compound having a lot of reactive functional groups like the resin which is used in the thermosetting powder coating composition, or the thermosetting powder coating composition.

As mentioned above, if improvement of the hardenability at a low temperature in the thermosetting powder coating composition is attempted by taking advantage of conventional technology, however, then storage stability such as blocking resistance will be sacrificed and nothing of practical use will be obtained. That is, among conventional and practically usable thermosetting powder coating compositions, there were none which had sufficient hardenability at a low temperature, and they necessitated a baking oven at a high temperature for crosslinking and hardening the composition.

For this reason, it is difficult to apply the conventional thermosetting powder coating composition to a material which is comparatively weak against heat or of which temperature is hardly elevated, such as a plastic materials, wood, etc., and further, such a circumstance has led to a situation that replacement of the existing solvent type thermosetting coating has hardly been developed industrially.

### DISCLOSURE OF INVENTION

It is an object of the present invention to provide a thermosetting powder coating composition which excels particularly in hardenability at a low temperature, and storage stability such as blocking resistance, etc.
Moreover, it is another object of the present invention to provide a thermosetting powder coating composition which can form a coating which excels in hardness, solvent resistance, acid resistance, and flexibility, etc., in addition to the above hardenability at a low temperature and storage stability.

The inventors of the present invention have researched thoroughly as to a hardening system which excels in hardenability at a low temperature, on the assumption that it is applicable to a thermosetting powder coating composition which requires essentially excellent storage stability, and as a result, they have found that an organic sulfonate derived from a carboxylic amide compound and an organic sulfonic acid having fluorine atoms has a function of promoting an ester exchange reaction between a hydroxyl group and a carboxylic ester group, without causing coloring of the hardened material.

Based on this finding, they have furthered the research to find that a thermosetting powder coating composition which excels in storage stability such as blocking resistance, etc., can be obtained by using a mixture which contains a polymer having hydroxyl groups and a polymer having carboxylic ester groups, or a polymer having both hydroxyl groups and carboxylic ester groups, and an organic sulfonate derived from an organic sulfonic acid having the above carboxylic amide compound and fluorine atoms, and that a coating can be formed by crosslinking and hardening it at a temperature which is remarkably lower than that of a conventional thermosetting powder coating composition.

Moreover, they confirmed that the coating which was formed by crosslinking and hardening the resultant thermosetting powder coating composition at a low temperature had an excellent appearance, and excellent general characteristics, which are required for a thermosetting powder coating composition, such as hardness, solvent resistance, acid resistance, and flexibility, and as such they completed the present invention.

That is, the present invention provides a thermosetting powder coating composition comprising a coating forming component which can crosslink and harden by an ester exchange reaction between a carboxylic ester group and a hydroxyl group, and an ester exchange reaction catalyst, in which the ester exchange reaction catalyst is constituted from an organic sulfonate (X) derived from a carboxylic amide and an organic sulfonic acid having fluorine atoms.

Moreover, the present invention provides the thermosetting powder coating composition above, in which the organic sulfonate (X) has a structure expressed by a general formula (IV):

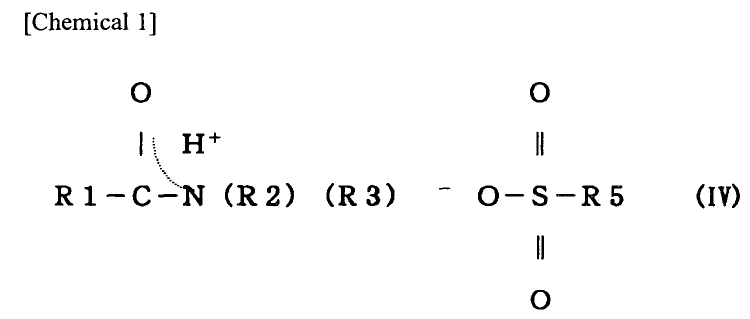

wherein each of R1, R2 and R3 independently represents a hydrogen atom or a monovalent organic group. R2 and R3 may be bonded to each other to form a divalent group expressed by general formula (II):

[Chemical 2] **-C(R4)**_{**2**}**CH**_{**2**}**-Y-CH**_{**2**}**C(R4)**_{**2**}**-** **(II)**

wherein R4 represents a hydrogen atom or a methyl group, Y represents any of a direct bond, a methylene group, a substituted methylene group, and an oxygen atom. And R1 and R2 may be bonded to each other to form a substituted or a non-substituted alkylene group having carbon atoms in total. R5 represents a monovalent organic group having fluorine atoms.

Moreover, the present invention provides a hardened material obtained by applying the thermosetting powder coating composition above to a base material, and crosslinking and hardening the applied thermosetting powder coating composition.

According to the present invention, it is possible to provide a thermosetting powder coating composition which excels particularly in hardenability at a low temperature, and storage stability such as blocking resistance, etc., and which is highly practically.

According to the thermosetting powder coating composition of the present invention, it is possible to set a condition for crosslinking and hardening at a temperature which is far lower than that of a conventional one, and to reduce the energy cost in the production step remarkably.

For this reason, it becomes possible to apply the thermosetting powder coating composition of the present invention to a material which is comparatively weak against heat or hardly heated-up and hence to which conventional thermosetting powder coating compositions were not applicable, such as a plastic material, wood, etc., and as a result, the applicable scope of an environmentally friendly thermosetting powder coating composition can be widely extended.

Moreover, according to the present invention, industrial replacement of the solvent type thermosetting powder coating composition which is used at present with an environmentally friendly thermosetting powder coating composition can be accelerated.

A preferred embodiment of the present invention will be explained in detail, below.
First of all, a coating forming component used in the present invention, which can be crosslinked and hardened by an ester exchange reaction between a carboxylic ester group and hydrogen group will be explained.
As the coating forming component, a polymer having two or more hydroxyl groups and/or two or more carboxylic ester groups, such as a vinyl type polymer, polyester resin, or polyurethane resin, etc. can be used as an essential component, in addition, a low molecular compound can be suitably used together.

The number-average molecular weight of the polymer which is used as such a coating forming component preferably ranges from 1000 to 30000, more preferably ranges from 2000 to 10000, still more preferably ranges from 2000 to 5000.

Moreover, not less than 80 weight % of the above coating forming component is preferably a polymer having a number-average molecular weight which ranges from 1000 to 30000, more preferably not less than 90 weight % is a polymer having number-average molecular weight which ranges from 1000 to 30000.

If the number-average molecular weight and the compounding percentage of the above polymer which is used as the coating forming component are within the above ranges respectively, then storage stability such as blocking resistance of the resultant thermosetting powder coating composition can be improved, and a coating which excels in hardness, solvent resistance, acid resistance, and flexibility can be formed. In addition, hardenablity and workability of the thermosetting powder coating composition can be also improved.

Moreover, softening point of the coating forming component used in the present invention preferably ranges from 50 to 130°C, and more preferably ranges from 90 to 120°C. If the softening point is within the range, then storage stability and flowability in a molten state of the resultant thermosetting powder coating composition are excellent and a coating which excels in smoothness can be formed.

As a material which can be used as the coating forming component in the above, specifically, a compound (A) which contains both two or more hydroxyl groups and two or more carboxylic ester groups in one molecule, a compound (B) which contains two or more hydroxyl groups in one molecule and no carboxylic ester groups, and a compound (C) which contains two or more carboxylic ester groups in one molecule and no hydroxyl groups, etc., are exemplary.

As the compound (A) which contains both two or more hydroxyl groups and two or more carboxylic ester groups in one molecule, for example, a polymer (a-1) having a number-average molecular weight ranging from 1000 to 30000 and containing both two or more hydroxyl groups and two or more carboxylic ester groups in one molecule, and a low molecular compound (a-2) having a number-average molecular weight of less than 1000 and containing both two or more hydroxyl groups and two or more carboxylic ester groups in one molecule, etc. are exemplary.

As a material which can be used as the polymer (a-1) in the above, specifically, a vinyl type polymer, a polyester resin, and a polyurethane resin, etc., each having a number-average molecular weight of 1000 to 30000, and both two or more hydroxyl groups and two or more carboxylic ester groups in one molecule are exemplary. Among these, by using a vinyl type polymer, it is possible to form a coating which excels in acid resistance particularly.

As a vinyl type polymer containing both two or more hydroxyl groups and two or more carboxylic ester groups in one molecule in the above, specifically, an acrylic type polymer, vinyl ester type polymer, α-olefin type polymer, fluoroolefin type polymer, aromatic vinyl type polymer, each having both two or more hydroxyl groups and two or more carboxylic ester groups in one molecule are exemplary, and in particular, an acrylic type polymer is preferable.

Such a vinyl type polymer containing both two or more hydroxyl groups and two or more carboxylic ester groups in one molecule can be produced by using a vinyl type monomer having hydroxyl groups and a vinyl type monomer having carboxylic ester groups as essential monomers, and if necessary using a vinyl type monomer which is copolymerizable with these monomers having no other hydroxyl groups and carboxylic ester groups, through various well-known methods.

That is, the objective vinyl type polymer can be produced by radical polymerization, ionic polymerization, or photopolymerization, according to a common method such as a solution polymerization method, a solution dispersing polymerization method, or a bulk polymerization method, in particular, a solution radical polymerization method is convenient.

The resultant vinyl type polymer is, if necessary solvent is removed therefrom, used in the form of a solid, when producing the thermosetting powder coating composition of the present invention.

Moreover, many of the vinyl type monomers containing hydroxyl groups, which are generally used, also contain carboxylic ester groups further, and hence, in the case in which a vinyl type monomer having both hydroxyl groups and carboxylic ester groups is used as a monomer, it is possible to produce the above objective vinyl type polymer having both two or more hydroxyl groups and two or more carboxylic ester groups in one molecule by homopolymerizing this monomer.

In the above vinyl type monomer having hydroxyl groups, as one which has no carboxylic ester groups, N-methylol(meth)acryl amide, 2-hydroxyethyl vinyl ether, 4-hydroxy butyl vinyl ether, 2-hydroxy ethyl aryl ether, etc. can be used.

Moreover, as one which can be used as a vinyl type monomer having both hydroxyl groups and carboxylic ester groups, specifically, 2-hydroxyethyl(meth)acrylate, 2-hydroxypropyl(meth)acrylate, 4-hydroxybutyl(meth)acrylate, ethyl-a-hydroxymethyl acrylate, etc., are exemplary. And further, vinyl type monomers having hydroxyl groups which are obtained by reacting these various kinds of hydroxyl vinyl monomer with ε-caprolactone can be also used.

Moreover, as one which can be used as a vinyl type monomer having carboxylate, besides the above vinyl type monomer having both hydroxyl groups and carboxylic ester groups, specifically, various kinds of alkyl(meth)acrylate having alkyl groups of 1 to 22 carbon atoms, such as methyl(meth)acrylate, ethyl(meth)acrylate, butyl(meth)acrylate, 2-ethylhexyl(meth)acrylate, lauryl(meth)acrylate, etc.;

various kinds of aliphatic(meth)acrylate, such as cyclopentyl(meth)acrylate, cyclohexyl(meth)acrylate, isobornyl(meth)acrylate, etc.;

various kinds of aralkyl(meth)acrylate, such as benzyl(meth)acrylate, phenetyl(meth)acrylate, etc.;

various kinds of alkoxyalkyl(meth)acrylate, such as 2-methoxyethyl(meth)acrylate, 2-ethoxyethyl(meth)acrylate, 1-methoxyethyl(meth)acrylate, 1-ethoxyethyl(meth)acrylate, etc.;

various kinds of halogen-substituted alkyl(meta)acrylate, such as 2-chloroethyl(meth)acrylate, 2-fluoroethyl(meth)acrylate, 2,2-difluoroethyl(meth)acrylate, 2,2,2-trifluoroethyl(meth)acrylate, etc.;

various kinds of alkyl ester, such as methyl crotonate, ethyl crotonate, etc.;

a dialkyl ester of various kinds of unsaturated dicarboxylic acid, such as dimethyl maleate, dibutyl maleate, dimethyl fumarate, dibutyl fumarate, dimethyl itaconate, dibutyl itaconate, etc.;

various kinds of carboxylic vinyl ester, such as vinyl acetate, vinyl pivalate, vinyl versate (vinyl t-decanoate), etc.;

various kinds of unsaturated carboxylic acid, such as 2-carboxy ethyl (meth)acrylate, etc.;

a monovinyl ester of various kinds of saturated dicarboxylic acid, such as succinic acid, adipic acid, sebacic acid, etc.;

a half ester of various kinds of unsaturated dicarboxylic acid such as maleic acid, fumaric acid, itaconic acid, etc. and a monohydric alcohol;

a carboxyl monomer which is an adduct of a hydroxyl monomer such as 2-hydroxy ethyl (meth) acrylate and various acid anhydrides such as succinic anhydride, maleic anhydride, etc., various kinds of monomers having acid groups other than carboxylic acid such as 2-phosphoryl oxy ethyl(meth)acrylate, etc. are exemplary.

Moreover, as a vinyl type monomer having no other copolymerizable hydroxyl groups and carboxylic ester groups, which is usable when producing a vinyl type polymer as the (a-1) polymer, various of aromatic vinyl type monomer, such as styrene, p-tert-butyl styrene, α-methyl styrene, vinyl toluene, etc.;

various kinds of (meth)acryl amides, such as (meth)acryl amide, N,N-dimethyl(meth)acryl amide, N-butoxymethyl(meth)acryl amide, etc.; various cyano vinyl type monomers, such as (meth)acrylonitrile, crotononitrile, etc.;

a various haloolefins, such as vinyl fluoride, vinylidene fluoride, tetrafluoro ethylene, chlorotrifluoroethylene, hexafluoropropylene, vinyl chloride, vinylidene chloride, etc.;

a various α-olefins, such as ethylene, propylene, isobutylene, 1-butene, etc.; various of unsaturated dicarboxylic acids, such as maleic acid, fumaric acid, itaconic acid, etc., and various monomers having acid groups other than a carboxylic group, such as vinyl sulfonic acid, etc.;

an alkyl vinyl ether, such as ethyl vinyl ether, n-butyl vinyl ether, isobutyl vinyl ether, cyclohexyl vinyl ether, etc. are exemplary.

Next, as a polyesther resin which has number-average molecular weight of 1000 to 30000 and both two or more hydroxyl groups and two or more carboxylic ester groups in one molecule and which is usable as the (a-1) polymer, that obtained by condensing a mixture of a polycarboxylic acid and a polyhydric alcohol shown below in an amount such that the hydroxyl groups of the polyhydric alcohol are in excess compared with the carboxylic groups of the polycarboxylic acid through a well-known method can be used.

At this time, as a usable polycarboxylic acid, an aliphatic dibasic acid, such as oxalic acid, succinic acid, adipic acid, azelaic acid, sebacic acid, dodecanoic diacid, eicosane diacid, etc.; an aromatic dicarboxylic acid, such as terephthalic acid, isophthalic acid, orthophthalic acid, 2,6-naphthalene dicarboxylic acid, etc.; an alicyclic dicarboxylic acid, such as 1,4-cyclohexane dicarboxylic acid, 1, 3-cyclohexane dicarboxylic acid, hexahydro phthalic anhydride, tetrahydro phthalic anhydride, etc.; an unsaturated dicarboxylic acid, such as maleic acid, fumaric acid, itaconic acid, etc.; a trifunctional or more carboxylic acid, such as trimellitic acid, pyromellitic acid, etc.; and a hydroxycarboxylic acid, such as parahydroxybenzoic acid, tartaric acid, etc. are exemplary.

Moreover, as the above polyhydric alcohol, ethylene glycol, 1, 3-propylene glycol, 1, 2-propylene glycol, 2-methy-1,3-propylene glycol, 1, 4-butylene glycol, 1, 3-butylene glycol, 1, 6-hexane diol, diethylene glycol, dipropyrene glycol, neopentyl glycol, triethylene glycol, 1,4-cyclohexane dimethanol, an ethylene oxide adduct of bisphenol A, a propylene oxide adduct of bisphenol A, cyclohexanedi methanol, hydrogenated bisphenol A, an ethylene oxide adduct of hydrogenated bisphenol A, a propylene oxide adduct of hydrogenated bisphenol A, glycerin, trimethylol propane, trishydroxymethyl amino methane, pentaerythritol, dipentaerythritol, etc. are exemplary.

An explanation will be given about a polyurethane resin having both two or more hydroxyl groups and two or more carboxylic ester groups in one molecule, and a number average molecular weight ranging from 1000 to 30000, which is usable as the (a-1) polymer. This polyurethane resin can be produced by a well-known method for producing a polyurethane resin.

For example, the polyurethane resin can be obtained by reacting a polyol having two or more carboxylic ester groups such as acrylic polyol or polyester polyol with a polyisocyanate under a condition such that hydroxyl groups of the polyol are in excess of isocyanate groups of the polyisocyanate.

As a poly isocyanate which can be used in that case, for example, diphenylmethane diisocyanate, tolylene diisocyanate, xylylene diisocyanate, triphenylmethane triisocyanate, and a hydrogenated product thereof, and further, a polyisocyanate such as tetramethylene diisocyanate, hexamethylene diisocyanate, trimethyl hexamethylene diisocyanate, isophorone diisocyanate, and lysine diisocyanate, etc. are exemplary.

Moreover, the total amount of the hydroxyl groups and the carboxylic ester groups contained in the (a-1) polymer preferably ranges from 0.1 moles to 8.6 moles, more preferably ranges from 0.3 moles to 8.6 moles per 1000 g of the polymer (a-1), in view of a balance between hardenability and stability of the resultant thermosetting powder coating composition.

Although the polymer (a-1) used in the present invention has both two or more hydroxyl groups and two or more carboxylic ester groups in one molecule, the polymer (a-1) produced by a well-known method in the above usually contains a compound which has one hydroxyl group and/or one carboxylic ester group in one molecule. However, as long as the compound which has two or more hydroxyl groups and two or more carboxylic ester group in one molecule is a principal component, the object of the present invention can be attained and hence there will be no problem.

The thermosetting powder coating composition of the present invention may contain a low molecular compound (a-2) having a number average molecular weight of less than 1000, and both two or more hydroxyl groups and two or more carboxylic ester groups in one molecule, besides the above polymer (a-1).

As this low molecular compound (a-2), a dihydroxy alkane dicarboxylic diester, such as dihydroxy dimethyl malonate, dihydroxy diethyl malonate, etc.; a dihydroxy alkenedicarboxylic diester, such as dihydroxy dimethyl fumarate, dihydroxy diethyl fumarate, etc.; a dihydroxy aromatic dicarboxylic diester, such as 2, 5-dihydroxy dimethyl terephthalate, 2, 5-dihydroxy diethyl terephthalate, 2, 5-dihydroxy-1, 4-benzene dimethyl acetate, 2, 5-dihydroxy-1, 4-benzene diethyl acetate, etc. are exemplary.

These are diesters of various of dihydroxy dicarboxylic acids, such as dihydroxy alkane dicarboxylic acid, dihydroxy alkene dicarboxylic acid, and dihydroxy aromatic series dicarboxylic acid, and alkanol.

Moreover, in addition to these, diesters of these dihydroxy dicarboxylic acids and various of substituted alkanols can be also used.

As these substituted alkanols, various alkoxy group substituted alkanols, such as 2-methoxy ethanol, 2-methoxy propanol, 3-methoxy propanol; various halogen substituted alkanols, such as 2-chloro ethanol, 2-fluoro ethanol, 2,2,2-trifluoro ethanol, etc.; various carboxylate substituted alkanols, such as methyl glycolate, ethyl lactate, methyl hydroxypropionate, dimethyl malate, etc. are exemplary, and these can be used as long as the storage stability (blocking-resistance) of the resultant thermosetting powder coating composition does not deteriorate.

Next, an explanation will be given about the compound (B) having two or more hydroxyl groups and no carboxylic ester groups in one molecule, which can be used as the coating forming component which constitutes the thermosetting powder coating composition of the present invention. As the compound (B), for example, a polymer (b-1) which has a number average molecular weight ranging from 1000 to 30000, two or more hydroxyl groups and no carboxylic ester groups in one molecule, and a low molecular compound (b-2) which has a number average molecular weight of less than 1000, two or more hydroxyl groups and no carboxylic ester groups in one molecule, etc. are usable.

As the polymer (b-1) which is usable as the compound (B), a vinyl type polymer, a polyurethane resin, a polyether resin, etc., having a number average molecular weight ranging from 1000 to 30000, two or more hydroxyl groups and no carboxylic ester groups in one molecule respectively, are exemplary.

Such a vinyl type polymer which is usable as the polymer (b-1) can be obtained by homopolymerizing a vinyl type monomer having hydroxyl groups and no carboxylic ester groups, or copolymerizing the above monomer with another vinyl type monomer having no hydroxyl groups and no carboxylic ester groups, which is copolymerizable with the monomer.

As the vinyl type monomer having hydroxyl groups and no carboxylic ester groups, which can be used at this time, cyclohexyl vinyl ether, N-methylol(meth)acrylamide, 2-hydroxy ethyl vinyl ether, 4-hydroxy butyl vinyl ether, 2-hydroxy ethyl allyl ether, etc. are exemplary.

As another vinyl type monomer having no hydroxyl groups and no carboxylic ester groups, which is copolymerizable with these, another vinyl type monomer having no hydroxyl groups and no carboxylic ester groups, which was exemplified as being usable when producing a vinyl type polymer as the polymer (a-1), can be used.

In order to produce a vinyl type polymer which is usable as the compound (B) using these vinyl type monomers, similarly when producing a vinyl type polymer as the above polymer (a-1), well-known and ordinary polymerizing methods can be applied, and a solution radical polymerization method is the easiest to use.

Moreover, the resultant vinyl type polymer is, while removing solvent therefrom if necessary, used in a solid state when producing the thermosetting powder coating composition of the present invention.

Moreover, although the polymer (b-1) which is usable as the above compound (B), other than a vinyl type polymer such as polyurethane resin, polyether resin, etc., can be produced by a well-known and common method such as a solution reaction method, solid phase reaction method, etc., the resultant polymer is used in a solid state when producing the thermosetting powder coating composition of the present invention, by removing solvent therefrom, in the case in which solvent was used.

The polyurethane resin having a number average molecular weight ranging from 1000 to 30000, two or more hydroxyl groups and no carboxylic ester groups in one molecule, which is usable as the above polymer (b-1), can be produced by various of well-known methods. For example, that is obtained by reacting a polyisocyanate with a compound having at least two hydroxyl groups in one molecule at a rate such that the hydroxyl groups contained in the compound are in excess of the isocyanate groups contained in the above polyisocyanate, can be used.

As the polyisocyanate which is usable at that time, the polyisocyanate, which is exemplified as being usable when producing the polyurethane resin as the above polyer (a-1) is exemplary.

Moreover, as a compound having at least two hydroxyl groups in one molecule, which is usable when producing the above polyurethane resin, besides polyhydric alcohols exemplified as being usable for obtaining a polyester resin as the above polymer (a-1), polymers having at least two hydroxyl groups and no carboxylic ester groups in one molecule, such as polyethylene glycol, polypropyrene glycol, etc., are exemplary.

Moreover, as a polyether resin which is usable as the above polymer (b-1), polyethylene glycol, polypropyrene glycol, etc., having a number average molecular weight ranging from 1000 to 30000, are exemplary.

The polymer having a number average molecular weight ranging from 1000 to 30000, two or more hydroxyl groups and no carboxylic ester groups, preferably has hydroxyl groups in an amount such that the hydroxyl value ranges from 10 to 400, more preferably in an amount such that the hydroxyl value ranges from 20 to 300.

The thermosetting powder coating composition of the present invention may contain a low molecular compound (b-2) having a number average molecular weight of less than 1000, two or more hydroxyl groups and no carboxylic ester groups in one molecule, besides the above polymer (b-1).

As such a low molecular weight compound (b-2), various alkane diols such as ethylene glycol, propylene glycol, butanediol, hexane diol, dodecane diol, etc.; various cycloalkane diols such as cyclohexanediol, methylhexanediol, etc.; various triols represented by trimethylol propane; lactone adducts of these diols and triols are suitable, and these can be used as long as the storage stability (blocking resistance) of the resultant thermosetting powder coating composition does not deteriorate.

Next, an explanation will be given about a compound (C) having two or more carboxylic ester groups and no hydroxyl groups in one molecule, which is usable as the coating forming component which constitutes the thermosetting powder coating composition of the present invention. As the compound (C), for example, a compound (c-1) having a number average molecular weight ranging from 1000 to 30000, two or more carboxylic ester groups and no hydroxyl groups in one molecule, and a polyvalent carboxylate compound (c-2) having a number average molecular weight of less than 1000, and no hydroxyl groups can be used.

As the above polymer (c-1), a vinyl type polymer, a polyester resin, etc., having a number average molecular weight ranging from 1000 to 30000, two or more carboxylic ester groups and no hydroxyl groups in one molecule, can be used.

Among these, the above vinyl type polymer can be obtained by homopolymerizing a vinyl type monomer having carboxylic ester groups and no hydroxyl groups, or copolymerizing the monomer with another vinyl type monomer having no hydroxyl groups and no carboxylic ester groups which is copolymerizable with the monomer.

At that time, as the vinyl type monomer having carboxylic ester groups and no hydroxyl groups, a vinyl type monomer having carboxylic ester groups other than the above vinyl type monomer having both hydroxyl groups and carboxylic ester groups, which is exemplified as being usable when producing a vinyl type polymer as the (a-1) polymer, is usable.

Moreover, as another vinyl type monomer having no hydroxyl groups and no carboxylic ester groups which is copolymerizable with the various vinyl type monomers, another vinyl type monomer having no hydroxyl groups and no carboxylic ester groups, which is exemplified as being usable when producing a vinyl type polymer as the above (a-1) polymer, can be used.

In order to produce the vinyl type polymer which is usable as the above compound (C) using these vinyl type monomers, similarly to when producing a vinyl type polymer as the above polymer (a-1), well-known and common methods are applicable, and a solution radical polymerization method is the easiest.

Moreover, the resultant vinyl type polymer is, removing solvent therefrom if necessary, used in a solid state when producing the thermosetting powder coating composition of the present invention.

As the polyester resin having a number average molecular weight ranging from 1000 to 30000, and two or more carboxylic ester groups and no hydroxyl groups in one molecule which is usable as the above polymer (c-1), that can be obtained by condensing a polyvalent carboxylic acid and a polyhydric alcohol at a percentage such that carboxyl groups contained in the polyvalent carboxylic acid are in excess of the hydroxyl groups contained in the polyhydric alcohol, so that hydroxyl groups might not remain in the resultant polyester resin, through a well-known method, can be used.

Here, as the above polyvalent carboxylic acid or polyhydric alcohol, the polyvalent carboxylic acid, and the polyhydric alcohol, each of which has been already exemplified as being used when producing a polyester resin as the polymer (a-1), can be used.

The content of carboxylic ester groups of the polymer (c-1) having a number average molecular weight ranging from 1000 to 30000, and two or more carboxylic ester groups and no hydroxyl groups in one molecule, ranges preferably from 0.2 to 12.0 moles per 1000 g of the polymer, and more preferably from 0.4 to 10 moles.

The thermosetting powder coating composition of the present invention may also contain a polyvalent carboxylic ester compound (c-2) having a number average molecular weight of less than 1000 and no hydroxyl groups, besides the above polymer (c-1).

As such a polyvalent carboxylate compound (c-2), various alkane dialkyl carboxylates, such as dimethyl oxalate, diethyl oxalate, dimethyl malonate, diethyl malonate, dimethyl succinate, dimethyl adipate, dimethyl sebacate, etc.; various alkyl polycarboxylates, such as trimethyl propane tricarboxylate, tetramethyl butane tetra carboxylate, etc.; various alkene dialkyl carboxylate, such as dimethyl malate, dimethyl phthalate, etc.; various aryl alkyl dicarboxylate, such as dimethyl phthalate, diethyl phthalate, dibutyl phthalate, dimethyl isophthalate, dimethyl terephthalate, dibutyl terephthalate, etc.; various aryl alkyl polycarboxylate, such as trimethyl trimellitate, tetramethyl pyromellitate, etc. are exemplary.

These are alkylesters obtainable from various polyvalent carboxylic acids and alkanols, and esters derived from these various polyvalent carboxylic acids and substituted alkanols can be used in addition to these.

As a substituted alkanol which is usable here, various alkoxy group-substituted alkanols, such as 2-methoxy ethanol, 2-methoxy propanol, 3-methoxy propanol, etc.; a various of halogen-substituted alkanols, such as 2-chloro ethanol, 2-fluoro ethanol, 2,2,2-trifluoro ethanol, etc.; various carboxylate-substituted alkanols, such as methyl glycolate, ethyl lactate, methyl hydroxy propionate, dimethyl malate, etc. are exemplary, and these can be used within a range which does not deteriorate the storage stability (blocking resistance) of the resultant thermosetting powder coating composition.

Next, an explanation will be given about an ester exchanging reaction catalyst which constitutes the present invention.
In the present invention, as the ester exchanging reaction catalyst, an organic sulfonate (X) derived from a carboxylic amide and an organic sulfonic acid having fluorine atoms is used, and other well-known catalysts can be also used, if necessary. Such an organic sulfonate (X) has a function of accelerating an ester exchanging reaction between hydroxyl groups and carboxylic ester groups contained in the coating forming component which constitutes the thermosetting powder coating composition of the present invention, which has already been explained.

The organic sulfonate (X) is a reactant derived from a carboxylic amide compound and an organic sulfonic acid having fluorine atoms, which is a compound having in one molecule at least one structure in which carboxylic amide groups contained in the above carboxylic amide compound are bonded to sulfonic acid groups contained in the above organic sulfonic acid having fluorine atoms at a molar ratio of 1:1.

As a carboxylic amide compound which can be used when producing such an organic sulfonate (X), well-known compounds having at least one carboxylic amide group in one molecule can be used. As a typical one thereof, a compound expressed by the following general formula (I), or a compound having two or more N-alkanoyl-2,2,6,6-tetra methyl pyperridine-4-yl groups is exemplary.

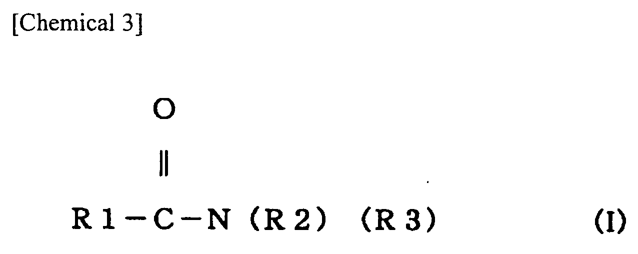

In formula (I), each of R1, R2 and R3 independently represents a hydrogen atom or monovalent organic group. R2 and R3 may be bonded to each other to form a divalent group expressed by the following general formula (II):

[Chemical 4] **-C(R4)**_{**2**}**CH**_{**2**}**-Y-CH**_{**2**}**C(R4)**_{**2**}**-** **(II)**

In formula (II), R4 represents a hydrogen atom or methyl group, Y represents any of a direct bond, methylene group, substituted methylene group, and oxygen atom. And further, R and R2 may be bonded to each other to form a substituted or a non-substituted alkylene group having 2 to 11 carbon atoms in total.

With respect to each of R1, R2 and R3, which constitute a carboxylic amide compound expressed as the general formula (I), as a specific example of a monovalent organic group, a substituted or a non-substituted alkyl group having 1 to 20 carbon atoms, a substituted or a non-substituted cycloalkyl group, a substituted or a non-substituted cycloalkenyl group, a substituted or a non-substituted aralkyl group, a substituted or a non-substituted aryl group, a substituted or a non-substituted alkenyl group, alkadienyl group, a heterocyclic residue in which oxygen atoms or sulfur atoms constitute a part of the ring, etc. are exemplary.

In the case in which these organic groups have substituted groups, as the substituted group, a halogen atom such as a fluorine atom, chlorine atom, bromine atom, and iodine atom, etc., and various atomic groups, such as a cyano group, hydroxyl group, alkoxy group, carboxyl group, alkoxy carbonyl group, carboxylic amide group, aryloxy carbonyl group, etc., are exemplary.

Next, as specific examples of the divalent group expressed by the general formula (II), a tetra-methylene group, penta methylene group, 3-oxa-1, 5-pentylene group, 1,1,4,4-tetra-methyl tetra-methylene group, 1,1,5,5-tetramethyl penta methylene group, 3-hydroxy-1,1,5,5-tetramethyl penta methylene group, 3-methoxy-1,1,5,5-tetramethyl pentamethylene group, 3-acetoxy-1,1,5,5-tetramethylpentamethylene group, 3-propionyloxy-1,1,5, 5-tetramethyl pentamethylene group, 1,1,5,5-tetramethyl-3-oxa-1,5-pentylene group, etc. are exemplary.

Next, an explanation will be given about what constitutes, in the general formula (I), a substituted or a non-substituted alkylene group having 2 to 11 carbon atoms in total, in which R1 and R2 are bonded to each other.

As a specific example of the non-substituted alkylene group having 2 to 11 carbon atoms in total, an ethylene group, propylene group, trimethylene group, (1-methyl)trimethylene group, (2-methyl)trimethylene group, tetramethylene group, (1-methyl)trimethylene group, (2-methyl)tetramethylene group, pentamethylene group, undecamethylene group, etc. are exemplary.

As a specific example of the substituted alkylene group having 2 to 11 carbon atoms in total, a substituted ethylene group, such as a chloro ethylene group, hydroxy ethylene group, carboxy ethylene group, methoxy carbonyl ethylene group, etc.;

a substituted propylene group, such as a 2-carboxy propylene group, 2-methoxy carbonyl propylene group, 1-chloro propylene group, 1-hydroxy propylene group, 1-methoxy carbonyl propylene group, etc.;

a substituted trimethylene group, such as a (1-chloro)trimethylene group, (1-cyano) trimethylene group, (2-hydroxy) trimethylene group, (1-carboxy) trimethylene group, (1-methoxy) trimethylene group, (1-methoxy carbonyl) trimethylene group,etc.;

a substituted tetramethylene group, such as a (1-chloro)tetramethylene group, (2-chloro) tetramethylene group, (1-cyano) tetramethylene group, (2-hydroxy)tetramethylene group, (1-carboxy)tetramethylene group, (1-methoxy)tetramethylene group, (1-methoxycarbonyl)tetramethylene group, (2-methoxycarbonyl)tetramethylene group,etc.;

a substituted pentamethylene group, such as a (1-chloro)pentamethylene group, (2-cyano) pentamethylene group, (1-methoxy)pentamethylene group, (1-methoxy carbonyl) pentamethylene group, etc.;

a substituted undecamethylene group, such as a (1-chloro)undecamethylene group, (2-cyano)undecamethylene group, (1-hydroxy)undecamethylene group, (1-carboxyl)undecamethylene, (2-carboxyl)undecamethylene group, (1-methoxy)undecamethylene group, (1-methoxy carbonyl)undecamethylene group, (2-methoxy carbonyl)undecamethylene group, etc. are exemplary.

In the above exemplified substituted or non-substituted alkylene groups having 2 to 11 carbon atoms in total which are formed by bonding R1 with R2, various substituted or non-substituted trimethylene groups and various substituted or non-substituted pentamethylene groups are preferable, and further trimethylene groups and pentamethylene groups are more preferable. As a carboxylic amide compound which forms the organic sulfonate (X), N-methyl-2-pyrrolidone is particularly preferable because it particularly excels in a function as a catalyst for hardening the organic sulfonate (X).

Next, an explanation will be given about the above compound having two or more N-alkanoyl-2,2,6,6-tetramethylpiperidine-4-yl groups in one molecule, which is usable as a carboxylic amide compound which forms the organic sulfonate (X). As a representative alkanoyl group which is contained in such a compound, an acetyl group, propanoyl group, isobutanoyl group, and 2-ethyl hexanoyl group are exemplary.

As a specific example of such a compound having N-2,2,6,6-tetramethylpiperidine-4-yl groups with alkanoyl groups, bis(1-acetyl-2,2,6,6-tetramethylpiperidine-4-yl)adipate, bis(1-acetyl-2,2,6,6-tetramethylpiperidine-4-yl)sebacate, bis(1-propanoyl-2,2,6,6-) tetramethylpiperidine-4-yl)adipate, bis(1-isobutanoyl-2,2,6,6-tetramethylpiperidine-4-yl)sebacate, etc. are exemplary.

Next, an explanation will be givne about an organic sulfonic acid having fluorine atoms which is usable when producing the organic sulfate (X).

The above organic sulfonic acid having fluorine atoms indicates a compound which has sulfonic groups bonded to organic groups having fluorine atoms as a substituent. As such an organic sulfonic acid, either a monovalent acid or a divalent or more acid can be used, and a monovalent acid expressed by the following general formula (III) is particularly preferable, in view of solubility of the resultant organic sulfonate (X) derived therefrom:

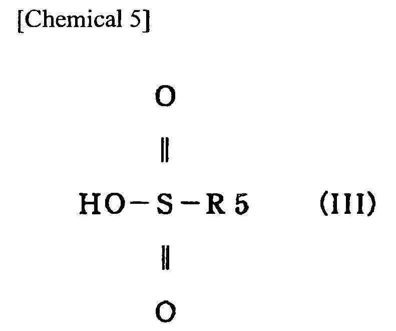

In formula (III), R5 represents a monovalent organic group having fluorine groups.

As specific examples of R5 which is a monovalent organic group having fluorine groups which is contained in the monovalent acid expressed by general formula (III) in the above, an alkyl group having 1 to 20 carbon atoms, a cycloalkyl group, a cycloalkenyl group, an aralkyl group, an aryl group, an alkenyl group, an alkadienyl group, a heterocyclic residue a part of the ring of which is constituted from oxygen atoms or sulfur atoms, having fluorine groups are exemplary. A part or all of the hydrogen atoms contained in these organic groups may be substituted with fluorine atoms.

Particularly preferable as such an R5 is an organic group having two fluorine atoms at an α-position, expressed by the following general formula (V), in view of catalytic activity of the organic sulfonate (X).

[Chemical 6] **R**_{**6**}**CF**_{**2**} **-** **(V)**

In formula (V), R6 represents a hydrogen atom, a fluorine atom, a substituted or non-substituted hydrocarbon group having 1 to 5 carbon atoms.

As specific examples of the substituted or non-substituted hydrocarbon group having 1 to 5 carbon atoms as R6 contained in the general formula (V), an alkyl group, a cycloalkyl group, an alkenyl group, etc. are exemplary. And in the case in which R6 is a hydrocarbon group having a substituent, as such a substituent, a halogen atom, such as a fluorine atom, chlorine atom, bromine atom, etc., a cyano group, an alkoxy carbonyl group, an alkoxy group, etc. are exemplary.

As the organic sulfonate (X) used in the present invention, a structure expressed by the following general formula (IV) is preferable, which is derived from the carboxylic amide compound expressed by the above general formula (I) and the organic sulfonic acid having fluorine atoms expressed by the general formula (III). In particular, N-methyl-2-pyrrolidone trifluoromethane sulfonate is the most preferable, because it excels in a function as a hardening catalyst for the organic sulfonate (X).

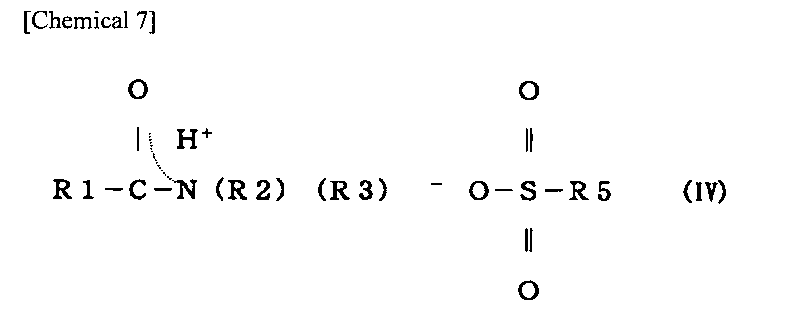

In the case in which the carboxylic amide compound has one carboxylic amide group, the resultant organic sulfanate (X) contains one salt structure contained in the above general formula (IV) in one molecule. And in the case in which the carboxylic amide compound has two or more carboxylic amide groups, the resultant organic sulfonate (X) contains one, or two or more salt structures contained in the above general formula (IV), corresponding to the usage-ratio between the carboxylic amide compound and the organic sulfonic acid.

An explanation will be given about a process for producing the organic sulfonate (X) used in the present invention. The organic sulfonate (X) can be produced by reacting the above carboxylic amide compound with an organic sulfonic acid having fluorine atoms.

As for a usage ratio of each raw material here, the molar ratio between the carboxylic amide groups contained in the carboxylic amide compound and the sulfonic acid groups contained in the organic sulfonic acid having fluorine atoms ranges preferably from 10:1 1 to 1:10, more preferably from 5:1 to 1:5, and still more preferably from 1.5:1 to 1:1.5.

Because this reaction generates heat, this reaction is preferably performed under cooling, and the reaction temperature preferably ranges from approximately 0 to 50 °C, more preferably from 0°C to room temperature.

In the case in which the carboxylic amide or the organic sulfonic acid is solid, powdery, or crystalline, the reaction can be performed using solvents. As a solvent used at that time, one is not reactive with the organic sulfonic acid is preferable.

As a method for reacting, either adding the organic sulfonic acid to the carboxylic amide, or adding the carboxylic amide to the organic sulfonic acid can be used. Moreover, it is also possible to add both components to a solvent, thereby reacting them.

The reaction time favorably ranges from approximately 10 minutes to several hours, because the reaction is a kind of neutralizing reaction.

After the reaction is completed, the resultant organic sulfonate (X) can be isolated by a common isolating method. That is, if the organic sulfonate (X) is not soluble in the solvent to be deposited, then the deposit can be filtered and isolated, whereas if the organic sulfonate (X) is dissolved in the solvent, then the target organic sulfonate (X) can be obtained by a solvent-removing method or precipitating method. Moreover, if necessary, the target salt can be purified through various methods, such as a solvent-washing method, recrystallising method, reprecipitating method, etc.

An explanation will be given about specific blending ratio between each coating forming components and the organic sulfonate (X), which constitutes the powder coating composition of the present invention.
First, in the case in which the powder coating composition of the present invention contains two components of a compound (A) and an organic sulfonate (X), in the blending ratio between the compound (A) and the organic sulfonate (X), the organic sulfonate (X) ranges preferably from 0.3 to 60 milimoles per 100g of the compound (A), more preferably from 0.35 to 50 milimoles.

Next, an explanation will be given about the case in which the thermosetting powder coating composition of the present invention contains three components of a compound (B), a compound (C) and an organic sulfonate (X).

In this case, with respect to the blending ratio between the compound (B) and the compound (C), the ratio between the equivalent of the hydroxyl groups contained in the compound (B) and the equivalent of the carboxylic ester groups contained in the compound (C), ranges, in terms of the ratio of the former to the latter, preferably from 1:0.1 to 1:10, more preferably from 1:0.2 to 1:5. Moreover, the amount of the organic sulfonate (X) preferably ranges from 0.3 to 60 milimoles, more preferably ranges from 0.35 to 50 milimoles, to 100 g in total of the compound (B) and the compound (C).

It is preferable to compound such that at least one of the compound (B) and the compound (C) mainly consists of a polymer having a number average molecular weight ranging from 1000 to 30000, in view of the storage stability of the resultant thermosetting powder coating composition.

Next, an explanation will be given about a case in which the thermosetting powder coating composition contains four components of a compound (A), a compound (B), a compound (C), and an organic sulfonate (X). In this case, with respect to the blending ratio between the compound (B) and the compound (C), the ratio between the equivalent of the hydroxyl groups contained in the compound (B) and the equivalent of the carboxylic ester groups contained in the compound (C), ranges, in terms of the ratio of the former to the latter, preferably from 1:0.1 to 1:10, more preferably from 1:0.2 to 1:5.

Moreover, the blending amount of the compound (A) is not particularly limited, and the compound (A) can be blended at an arbitrary percentage, in addition to the above compound (B) and the compound (C). The blending amount of the organic sulfonate (X) component ranges preferably from 0.3 to 60 millimoles per 100 g in total of these three components of the compound (A), the compound (B), and the compound (C), and more preferably from 0.35 to 50 millimoles.

Next, an explanation will be given about a process for producing the thermosetting powder coating composition of the present invention using each component. In order to produce the thermosetting powder coating composition, various well-known methods can be applied.

For example, the thermosetting powder coating composition can be produced by suitably selecting the raw material properly from the compound (A), the compound (B), the compound(C) and the organic sulfonate (X) in the above, in order to produce a target thermosetting powder coating composition, and further using various well-known raw materials such as a light stabilizer such as a leveling agent, ultraviolet absorbing agent, a hindered amine type light stabilizer, an antioxidant, a pigment, a pigment dispersing agent, a light stabilizer such as a hindered amine type light stabilizer, etc., if necessary, and mixing these raw materials, then melting and kneading them, and thereafter finely milling them through a mechanical milling method.

Moreover, the thermosetting powder coating composition of the present invention can also be produced by a spray-drying method in which a solution which contains the above various raw materials are prepared, and then the solution is sprayed to be dried.

The thermosetting powder coating composition of the present invention can be used as it is as a clear thermosetting powder coating composition, or used as a colored thermosetting powder coating composition, while blending pigments therewith.

Moreover, the thermosetting powder coating composition of the present invention may contain various well-known hardening agents, as long as the characteristics and effects of the present invention are not deteriorated.

At that time, as a hardening agent, that is reactive with hydroxyl groups can be used, for example, various polyisocyanates, such as an aromatic diisocyanate such as tolylene diisocyanate, etc., an aliphatic diisocyanate such as hexamethylene diisocyanate, etc., or an alicyclic diisocyanate such as isophorone diisocyanate, etc.;

a prepolymer having various isocyanate groups, or a prepolymer having blocked isocyanate groups, being derived from the above polyisocyanate;

various amino resins such as a melamine resin, a urea resin, etc., a silicone resin, an epoxy resin, etc. are exemplary.

A target cured product of a thermosetting powder coating composition can be provided by applying the thermosetting powder coating composition of the present invention onto a base material to be coated through a well-known method, and thereafter cross-linking and hardening the composition to form a hardened coating (film) on the base material to be coated.

As the base material to be coated in the above, various metallic materials or metallic products such as iron, aluminum, stainless steel, galvanized sheet, tin plate, etc., the same materials on which surface treatment such as chemical conversion, zinc phosphate treatment, chromate treatment, etc. or electrodeposition is performed, tile, glass, various inorganic building materials, heat-resistant plastic, wood, etc. are exemplary.

More specifically, an automobile body or automobile parts, motor bicycles or motor bicycle parts, various building members such as a gate or a fence, various materials for interior or exterior finishing of a building such as aluminum sash, etc., a member made of iron or non-ferrous metal such as an aluminum wheel, plastic products, woodworking products, etc. are exemplary.

### BEST MODE FOR CARRYING OUT THE INVENTION

### [Example]

Next, the present invention will be explained by Reference Examples, Examples, and Comparative Examples.
Hydroxyl value, acid value, softening point, and number average molecular weight of each of the samples were obtained by the following methods.
[Hydroxyl value]: A sample was dissolved in a mixed solution of acetic anhydride and pyridine, and the resultant mixture was refluxed for an hour while heating it at 100°C to acetylate hydroxyl groups, and thereafter ion exchange water was added and heated and refluxed further, and then cooled down, and back titration was performed using a toluene/methanol solution of potassium hydroxide to obtain the hydroxyl value.

[Acid value]: A sample was dissolved in cyclohexanone, and the resultant solution was titrated with a 0.1N methanol solution of potassium hydroxide to obtain the acid value.

[Softening Point]: Using a ring-ball type automatic softening point tester (made by MEIHOU SEISAKUSHO Co., Ltd.), while heating a sample at a rate of 3°C/min. in a heating bath of glycerine, the temperature at which the sample started to be softened and the ball fell was measured (unit: °C).

[Number average molecular weight]: It was measured by liquid chromatography in which columns of TSK gel G5000HXL, G4000HXL, G3000HXL, and G2000HXL made by TOSO Col, Ltd. connected in series were installed, using tetrahydrofuran as an eluate.

### Reference Example 1 [Example of preparation of a vinyl type polymer (A-1) having both hydroxyl groups and carboxylic ester groups]

100 weight parts of xylene was added into a reactor which was equipped with a thermometer, a reflux condenser, a stirrer, a dropping funnel, and a nitrogen gas introduction pipe, and it was heated to 135°C under a nitrogen atmosphere.
Subsequently, a mixture consisting of 30 weight parts of styrene , 27 weight parts of methyl methacrylate, 18 weight parts of butyl acrylate, 35 weight parts of 2-hydroxy propyl methacrylate, and 3 weight parts of tert-butyl peroxy-2-ethyl hexanoate (referred to as TBO, hereinafter) was added dropwise thereinto for 6 hours at the same temperature.

It was held at the same temperature for 15 hours after the dropwise addition was finished to complete the reaction, and thereafter the resultant polymer solution was further held under a reduced pressure of approximately 20 Torr to remove xylene therefrom, thereby obtaining a vinyl type polymer (A-1) having a number average molecular weight of 2500, softening point of 111°C, and hydroxyl value of 148.

### Reference Example 2 [Example of preparation of a vinyl type polymer (A-2) having both hydroxyl groups and carboxylic ester groups]

Into the same reactor as in Reference Example 1, 100 weight parts of xylene was added, and it was heated to 135°C under a nitrogen atmosphere.
Subsequently, at the same temperature, a mixture consisting of 30 weight parts of styrene , 28 weight parts of methyl methacrylate, 17 weight parts of butyl acrylate, 25 weight parts of "PLACCEL FM-1" [which is an ε-caprolactam adduct of 2-hydroxy ethyl methacrylate, brand name, produced by DAICEL CHEMICAL INDUSTRIES, Ltd.], and 2.4 weight parts of TBO was added dropwise thereinto for 6 hours.

It was held at the same temperature for 15 hours after the dropwise addition was finished to complete the reaction, and thereafter the resultant polymer solution was further held under a reduced pressure of approximately 20 Torr to remove xylene therefrom, thereby obtaining a vinyl type polymer (A-2) having a number average molecular weight of 2000, softening point of 96°C, and hydroxyl value of 57.

### Reference Example 3 [Example of preparation of a vinyl type polymer (A-3) having both hydroxyl groups and carboxylic ester groups]

Into the same reactor as in Reference Example 1, 100 weight parts of xylene was added, and it was heated to 135°C under a nitrogen atmosphere.
Subsequently, at the same temperature, a mixture consisting of 46 weight parts of styrene, 26 weight parts of dibutyl fumarate, 28 weight parts of 2-hydroxy propyl methacrylate, and 4 weight parts of TBO was added dropwise thereinto for 6 hours.

It was held at the same temperature for 15 hours after the dropwise addition was finished to complete the reaction, and thereafter the resultant polymer solution was further held under a reduced pressure of approximately 20 Torr to remove xylene therefrom, thereby obtaining a vinyl type polymer (A-3) having a number average molecular weight of 2300, softening point of 108°C, and hydroxyl value of 107.

### Reference Example 4 [Example of preparation of a vinyl type polymer (A-4) having both hydroxyl groups and carboxylic ester groups]

Into the same reactor as in Reference Example 1, 100 weight parts of xylene and 50 weight parts of normal butanol were added, and it was heated to 114°C under a nitrogen atmosphere.
Subsequently, at the same temperature, a mixture consisting of 20 weight parts of styrene , 20 weight parts of methyl methacrylate, 60 weight parts of 2-hydroxy ethyl methacrylate, and 7 weight parts of TBO was added dropwise thereinto for 6 hours.

It was held at the same temperature for 15 hours after the dropwise addition was finished to complete the reaction, and then 100 weight parts of toluene was further added to the resultant polymer solution, and thereafter distillation under reduced pressure was performed, and then it was held under a reduced pressure of approximately 20 Torr to remove solvent therefrom, thereby obtaining a vinyl type polymer (A-4) having a number average molecular weight of 2000, softening point of 120°C, and hydroxyl value of 259.

### Reference Example 5 [Example of preparation of a polyester resin (A-5) having both hydroxyl groups and carboxylic ester groups]

160 weight parts of neopentyl glycol, 210 weight parts of ethylene glycol, 60 weight parts of trimethylol propane, 450 weight parts of telephthalic acid, 300 weight parts of isophthalic acid, and 0.5 weight parts of dibutyl tin oxide were added into a reactor which was equipped with a stirrer, a thermometer, a rectifying tower, and a nitrogen gas inlet, and it was heated to 240°C for 5 hours, while stirring under a nitrogen atmosphere. A dehydration condensation reaction was continued at 240 °C to obtain a polyester resin (A-5) having a number average molecular weight of 1900, an acid value of 5 mg KOH/g, a hydroxyl value of 102 mg KOH/g, and a softening point of 115°C.

### Reference Example 6 [Example of preparation of a vinyl type polymer (B-1) having two or more hydroxyl groups in one molecule]

100 weight parts of xylene was added into a reactor which was equipped with a thermometer, a reflux condenser, a stirrer, a dropping funnel, and a nitrogen gas introduction pipe, and it was heated to 135°C under a nitrogen atmosphere.
Subsequently, at the same temperature, a mixture consisting of 90 weight parts of cyclohexyl vinyl ether, 10 weight parts of 2-hydroxy ethyl vinyl ether, and 6 weight parts of TBO was added dropwise thereinto for 6 hours at the same temperature.

It was held at the same temperature for 15 hours after the dropwise addition was finished to complete the reaction, and thereafter the resultant polymer solution was further held under a reduced pressure of approximately 20 Torr to remove xylene therefrom, thereby obtaining a vinyl type polymer (B-1) having a number average molecular weight of 2000, softening point of 102°C, and hydroxyl value of 55.

### Reference Example 7 [Example of preparation of a vinyl type polymer (C-1) having two or more carboxylic ester groups in one molecule]

Into the same reactor as in Reference Example 1, 100 weight parts of xylene was added, and it was heated to 135°C under a nitrogen atmosphere.
Subsequently, at the same temperature, a mixture consisting of 70 weight parts of styrene , 30 weight parts of ethyl acrylate, and 4 weight parts of TBO was added dropwise thereinto for 6 hours.

It was held at the same temperature for 15 hours after the dropwise addition was finished to complete the reaction, and the resultant polymer solution was held under a reduced pressure of approximately 20 Torr to remove solvent therefrom, thereby obtaining a vinyl type polymer (C-1) having a number average molecular weight of 2000, softening point of 101°C, and hydroxyl value of 0.

### Reference Example 8 [Example of preparation of a vinyl type polymer (C-2) having two or more carboxylic ester groups in one molecule]

Into the same reactor as in Reference Example 1, 100 weight parts of xylene was added, and it was heated to 135°C under a nitrogen atmosphere.
Subsequently, at the same temperature, a mixture consisting of 75 weight parts of methyl methacrylate, 15 weight parts of normal butyl methacrylate, 10 weight parts of 2-ethylhexyl acrylate, and 4 weight parts of TBO was added dropwise thereinto for 6 hours.

It was held at the same temperature for 15 hours after the dropwise addition was finished to complete the reaction, and the resultant polymer solution was held under a reduced pressure of approximately 20 Torr to remove solvent therefrom, thereby obtaining a vinyl type polymer (C-2) having a number average molecular weight of 2000, softening point of 106°C, and hydroxyl value of 0.

### Reference Example 9 [Example of preparation of a vinyl type polymer (D-1) having epoxy groups]

Into the same reactor as in Reference Example 1, 100 weight parts of xylene was added, and it was heated to 135°C under a nitrogen atmosphere.
Subsequently, at the same temperature, a mixture consisting of 25 weight parts of styrene, 20 weight parts of methyl methacrylate, 25 weight parts of butyl methacrylate, 30 weight parts of glycidyl methacrylate, and 4 weight parts of TBO was added dropwise thereinto for 6 hours.

It was held at the same temperature for 15 hours after the dropwise addition was finished to complete the reaction, and the resultant polymer solution was held under a reduced pressure of approximately 20 Torr to remove solvent therefrom, thereby obtaining a vinyl type polymer (D-1) having a number average molecular weight of 2200, softening point of 110°C, and an epoxy equivalent of 535.

### Reference Example 10 [Example of preparation of N-methyl-2-pyrrolidone trifluoromethane sulfonate (X-1)]

9.91 weight parts of N-methyl-2-pyrrolidone, and 100 weight parts of toluene were added into a reactor which was equipped with a stirrer, a dropping funnel, and a nitrogen gas introduction pipe. This mixture was cooled to approximately 5°C under a nitrogen atmosphere, while stirring, and 15.0 weight parts of trifluromethane sulfonate was added dropwise thereinto for 1 hour.

The reaction was continued for 5 hours after the dropwise addition was finished. After the reaction was finished, toluene was removed under a reduced pressure, the resultant product was washed with n-heptane, and filtered, separated and dried under a reduced pressure to obtain a powdery white salt (X-1) in an amount of 23.5 weight parts. The yield was 97%.

### Reference Example 11 [Example of preparation of N,N-dimethyl acetoamide trifluoromethane sulfonate (X-2)]

8.7 g of N,N-dimethyl acetoamide and 100 ml of toluene were added into a reactor which was equipped with a stirrer, a dropping funnel, and a nitrogen gas introduction pipe. This mixture was cooled to approximately 5°C under a nitrogen atmosphere, while stirring, and 15.0 weight parts of trifluromethane sulfonate was added dropwise thereinto for 1 hour.

The reaction was continued for 2 hours after the dropwise addition was finished. After the reaction was finished, toluene was removed under a reduced pressure, to obtain a solid salt (X-2) quantitatively.

### Reference Example 12 [Example of preparation of N,N'-diacetyl-bis(2,2,6,6-tetramethyl piperidine-4yl)sebacate trifluoromethane sulfonate (X-3)]

5.64 g of N,N'-diacetyl-bis(2,2,6,6-tetramethyl piperidine-4yl)sebacate and 100 mg of toluene were added into a reactor which was equipped with a stirrer, a dropping funnel, and a nitrogen gas introduction pipe. This mixture was cooled to approximately 5°C under a nitrogen atmosphere, while stirring, and 3.0 g of trifluromethane sulfonate was added dropwise thereinto for 10 minutes.

The reaction was continued for 1 hour after the dropwise addition was finished. After the reaction was finished, toluene was removed under a reduced pressure, to obtain an oily salt (X-3) in an amount of 8.6g. The yield was 99%.

Examples 1 to 10 and Comparative Examples 1 to 5
(Preparation of theremosetting powder coating composition)
Mixtures in which the raw material obtained in each Reference Example was blended at the percentage shown in Tables 1, 2 and 3, were subjected to melting-kneading at a temperature of 90 to 100°C, using an "APV kneader MP-2015", which is a twin-shaft kneading apparatus, made be TSUBACOH YOKOHAMA HANBAI Co., Ltd., and thereafter the resultant kneaded product was finely milled, and then classified through a mesh having an aperture size of 200 mesh to prepare theremosetting powder coating compositions (P-1) to (P-8), and (p-1) to (p-6) having an average particle size of 30 to 40 µm.

**[Table 1]**

| | | Example | | | | |
|---|---|---|---|---|---|---|
| Item | | 1 | 2 | 3 | 4 | 5 |
| Designation of thermosetting powder coating composition | | P-1 | P-2 | P-3 | P-4 | P-5 |
| (A) | A-1 | 100 | | | | 70 |
| | A-2 | | 100 | | 70 | |
| | A-3 | | | 80 | | |
| | A-4 | | | 20 | | |
| | A-5 | | | | 30 | |
| (X) | X-1 | 0.5 | 0.5 | 0.5 | 0.5 | 0.5 |
| (B) | B-1 | | | | | 15 |
| (C) | C-1 | | | | | 15 |
| Benzoin (weight parts) | | 0.5 | 0.5 | 0.5 | 0.5 | 0.5 |
| POWDERMATE 570 FL 2) (weight parts) | | 0.8 | 0.8 | 0.8 | 0.8 | 0.8 |

**[Table 2]**

| | | Examples | | |
|---|---|---|---|---|
| Item | | 6 | 7 | 8 |
| Designation of thermosetting powder coating composition | | P-6 | P-7 | P-8 |
| (A) | A-1 | | 100 | 100 |
| (X) | X-1 | 0.5 | | |
| | X-2 | | 0.5 | |
| | X-3 | | | 0.5 |
| (B) | B-1 | 30 | | |
| (C) | C-2 | 70 | | |
| Benzoin (weight parts) | | 0.5 | 0.5 | 0.5 |
| POWDERMATE 570 FL 2) (weight parts) | | 0.8 | 0.8 | 0.8 |

**[Table 3]**

| | | Comparative Examples | | | | | |
|---|---|---|---|---|---|---|---|
| Item | | 1 | 2 | 3 | 4 | 5 | 6 |
| Designation of thermosetting powder coating composition | | p-1 | p-2 | p-3 | p-4 | p-5 | p-6 |
| Compound | A-1 | 100 | | | | 100 | 70 |
| | B-1 | | 30 | | 30 | | |
| | C-2 | | 70 | | | | |
| | D-1 | | | 83 | 70 | | |
| Hardening Catalyst | TIPT | | | | 1.0 | 1.0 | |
| | p-TSA | | | | 1.0 | 1.0 | |
| DDA 1)(weight parts) | | | | 17 | | | |
| SUPER BECKAMINE L-164 3)(weight parts) | | | | | | | 30 |
| Benzoin (weight parts) | | 0.5 | 0.5 | 0.5 | 0.5 | 0.5 | 0.5 |
| POWDERMATE 570 FL 2) (weight parts) | | 0.8 | 0.8 | 0.8 | 0.8 | 0.8 | 0.8 |

1) DDA; 1,12-dodecanoic diacid (produced by UBE INDUSTRIES, Ltd.)
2) POWDERMATE 570 FL; flow and leveling agent (brand name, produced by TROY CORPORATION)
3) SUPER BECKAMINE L-164 ; A butyl etherified melamine resin, solid contents 97% or more (brand name, produced by DAINIPPON INK AND CHEMICALS INCORPORATED)
   "TIPT"; tetraisopropyl titanate
   "p-TSA"; p-toluenesulfonic acid

Next, various coatings were formed according to the following method for forming a coating, using the resultant thermosetting powder coating compositions (P-1) to (P-8), (p-1) to (p-5), and then each coating was subjected to a coating performance test.
As to (p-6), blocking was generated immediately after the coating was formed, and hence it was impossible to form a coating by application. The results are shown in Table 4, Table 5 and Table 6.

### [Method for forming coating]

Using each of the thermosetting powder coating compositions (P-1) to (P-8), and (p-1) to (p-5), statically powder coating was performed onto a base material, such that the coating thickness after baking finishing onto the base material ranged from 60 to 70 µm, and thereafter baking finishing was performed under a condition of 120°C/for 20 minutes to obtain coated products having a coating (referred to as "powder coating", hereinafter) which consisted of the thermosetting powder coating composition.
It should be noted that as the above base material, a zinc phosphate-treated steel sheet having a size of 0.8 mm(thickness)×70mm× 150mm was used.

**[Table 4]**

| Item | | Examples | | | | |
|---|---|---|---|---|---|---|
| | | 1 | 2 | 3 | 4 | 5 |
| Designation of thermosetting powder coating composition | | P-1 | P-2 | P-3 | P-4 | P-5 |
| Powder coating | Hardness | H | F | H | H | H |
| | Solvent-resistance | A | A | A | B | A |
| | Acid-resistance | A | A | A | B | A |
| | Bending-resistance | B | A | A | B | B |
| | Storage stability | B | B | B | B | B |

**[Table 5]**

| Item | | Examples | | |
|---|---|---|---|---|
| | | 6 | 7 | 8 |
| Designation of thermosetting powder coating composition | | P-6 | P-7 | P-8 |
| Powder coating | Hardness | F | HB | HB |
| | Solvent-resistance | B | B | B |
| | Acid-resistance | B | B | B |
| | Bending-resistance | B | B | B |
| | Storage stability | B | B | B |

**[Table 6]**

| Item | | Comparative Examples | | | | | |
|---|---|---|---|---|---|---|---|
| | | 1 | 2 | 3 | 4 | 5 | 6 |
| Designation of thermosetting powder coating composition | | p-1 | p-2 | p-3 | p-4 | p-5 | p-6 |
| Powder coating | Hardness | <B | <B | <B | <B | <B | none |
| | Solvent-resistance | F | F | F | F | F | none |
| | Acid-resistance | F | F | F | F | F | none |
| | Bending-resistance | F | F | F | F | F | none |
| | Storage stability | B | B | B | B | B | C |

| | | | | | | | |
|---|---|---|---|---|---|---|---|
| 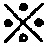 none: there was no evaluation. | | | | | | | |

Hardness ...pencil hardness [Mitsubishi UNI (trade mark) was used, JIS K5600-5-4] The hardness of a pencil which does not form any scars when the pencil is put on the coating.

Solvent resistance...After scrubbing a coating by 10 runs using a felt which is impregnated with toluene, the coating is judged with the naked-eye.
- A: The coating has gloss and no remarkable damage.
- B: The coating has gloss, but the coating is etched by a solvent.
- C: The coating has poor gloss, and the coating is etched by a solvent.
- F: The coating is soluble in a solvent and the coating has no gloss.

Acid resistance...A panel on which 0.1 milliliters of an aqueous solution of 10% sulfuric acid is placed on the coating, is held in a hot-air dryer heated at 70°C for 30 minutes, and thereafter the surface of the coating is washed with water and dried, and the surface of the coating is judged by the naked-eye.

- A: There is no etching.
- B: There is a little etching.
- C: The degree of etching is noticeable.
- F: The coating is dissolved by etching.

Bending resistance...Bending a test pierce by 90° at 25°C, while directing the coated surface upwards, and cracks at the bending part are judged.
- A: There are no cracks.
- B: There are a few cracks.
- C: There are cracks having approximately half the length of the bent part.
- F: There are cracks over the entire surface of the coating.

Storage stability...It is judged from the state of output of the powder coating composition when coating is performed with a spray gun, after being stored at room temperature for two weeks.
- A: Coating can be performed successfully.
- B: Blocking has occurred slightly, and discharging of paint from the spray gun often becomes uneven.
- C: Blocking has occurred, such that spray coating is impossible.

## Claims

1. A thermosetting powder coating composition comprising a coating forming component which can crosslink and harden by an ester exchange reaction between a carboxylic ester group and a hydroxyl group, and an ester exchange reaction catalyst, wherein said ester exchange reaction catalyst is constituted from an organic sulfonate (X) derived from a carboxylic amide and an organic sulfonic acid having fluorine atoms.

2. The thermosetting powder coating composition as set forth in claim 1, wherein said coating forming component contains a polymer which contains two or more hydroxyl groups and/or two or more carboxylic ester groups in one molecule.

3. The thermosetting powder coating composition as set forth in claim 1, wherein said coating forming component is a vinyl type polymer.

4. The thermosetting powder coating composition as set forth in any one of claims 1 to 3, wherein said carboxylic amide compound is expressed by a general formula (I) 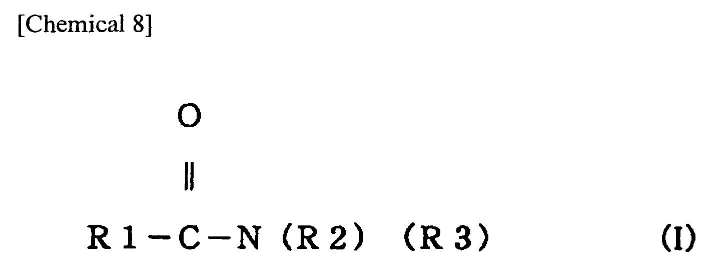 wherein R1, R2 and R3 independently represents a hydrogen atom or monovalent organic group. R2 and R3 may be bonded to each other to form a divalent group expressed by a general formula (II): 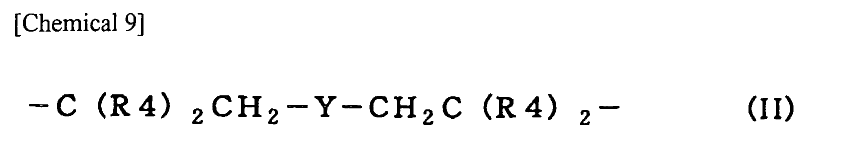 wherein R4 represents a hydrogen atom or methyl group, Y represents any of a direct bond, methylene group, substituted methylene group, and oxygen atom, and R1 and R2 may be bonded to each other to form a substituted or a non-substituted alkylene group having 2 to 11 carbon atoms in total.

5. The thermosetting powder coating composition as set forth in any one of claims 1 to 3, wherein said carboxylic amide compound contains two or more N-alkanoyl-2,2,6,6-tetramethyl piperidine-4-yl groups in one molecule.

6. The thermosetting powder coating composition as set forth in any one of claims 1 to 3, wherein said carboxylic amide compound is N-methyl-2-pyrolidone.

7. The thermosetting powder coating composition as set forth in any one of claims 1 to 3, wherein said organic sulfonic acid having fluorine atoms is expressed by a general formula (III): 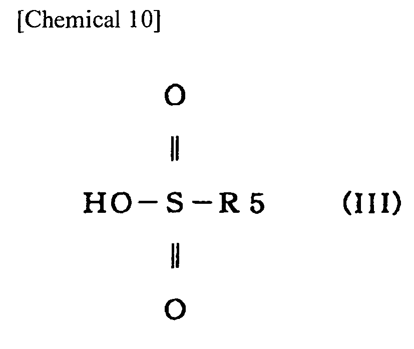 wherein R5 represents a monovalent organic group having fluorine atoms.

8. The thermosetting powder coating composition as set forth in any one of claims 1 to 3, wherein said organic sulfonate (X) has a structure expressed by a general formula (IV): 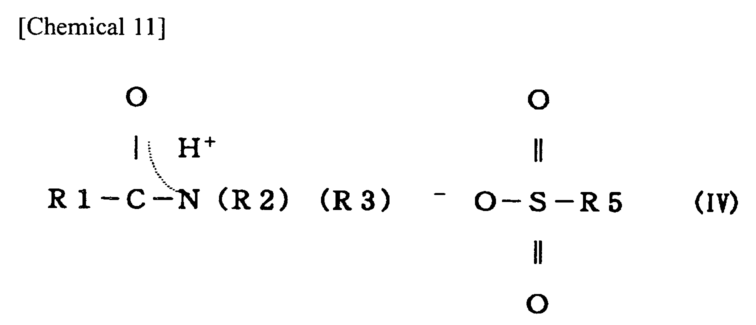 wherein each of R1, R2 and R3 independently represents a hydrogen atom or a monovalent organic group, and R2 and R3 may be bonded to each other to form a divalent group expressed by a general formula (II):
[Chemical 12] **-C(R4)**_{**2**}**CH**_{**2**}**-Y-CH**_{**2**}C(**R4)**_{**2**}**-** **(II)**
wherein R4 represents a hydrogen atom or methyl group, Y represents any of a direct bond, a methylene group, a substituted methylene group, and an oxygen atom, and R1 and R2 may be bonded to each other to form a substituted or a non-substituted alkylene group having carbon atoms of 2 to 11 in total, and R5 represents a monovalent organic group having fluorine atoms.

9. The thermosetting powder coating composition as set forth in claim 7, wherein said R5 in the general formula (III) is a monovalent organic group expressed by a general formula (V):
[Chemical 13] **R6CF**_{**2**} **-** **(V)**
wherein R6 represents a hydrogen atom, a fluorine atom, or a substituted or non-substituted hydrocarbon group having 1 to 5 carbon atoms.

10. A hardened material obtained by applying the thermosetting powder coating composition as set forth in any one of claims 1 to 3 to a base material, and crosslinking and hardening the applied thermosetting powder coating composition.
